# EUROPEAN PATENT APPLICATION

(11) **EP 4 851 965 A1**
(43) Date of publication of application: **09.12.2026**
(21) Application number: 26178013.4
(22) Date of filing: 11.05.2026
(51) Int. Cl.: G08G 1/005, G06V 20/56, G06V 20/62, G06V 30/10, G08G 1/00

(54) **SYSTEM AND METHOD FOR AUTOMATIC NOTIFICATION OF PARKING LOT IDENTIFIERS**

(30) Priority: 03.06.2025 IN 202541053870
(71) Applicant: NXP USA, Inc, Austin, TX 78735 (US)
(72) Inventor: Selvaraj, Suganya, 5656 AG Eindhoven (NL)
(74) Representative: Schmütz, Christian Klaus Johannes

(57) **Abstract**

A system included in a vehicle is disclosed. The system includes a processor. The processor detects that a speed of the vehicle has reached below a threshold value. Based on the speed of the vehicle reaching below the threshold value, the processor obtains images captured by a camera system of the vehicle and determines that the vehicle is in the parking lot based on parking layout attributes in the obtained set of images. Based on the parking lot determination, the processor identifies a parking lot identifier associated with a parking location of the vehicle in a parking lot. The processor generates for a communication device associated with the vehicle, a notification that includes the identified parking lot identifier.

## Description

### FIELD OF USE

The present disclosure relates generally to vehicles, and, more particularly, to a system and a method for automatic notification of parking lot identifiers.

### BACKGROUND

Parking lots are a part of modern infrastructure and are commonly found in a wide range of facilities, including shopping centers, airports, office complexes, hospitals, and other public or commercial facilities. The parking lots are designed to accommodate a large number of vehicles and may be distributed across multiple zones, levels, or sections. While parking lots offer a convenient means of parking, vehicle users often experience difficulty locating parked vehicles, especially in large or unfamiliar environments. This can result in time loss and a degraded user experience.

### BRIEF DESCRIPTION OF DRAWINGS

The following detailed description of the embodiments of the present disclosure will be better understood when read in conjunction with the appended drawings. The present disclosure is illustrated by way of example, and not limited by the accompanying figures, in which like references indicate similar elements.
FIG. 1 illustrates a schematic diagram of a system environment in accordance with an embodiment of the present disclosure;
FIG. 2 is a block diagram that illustrates a process of parking lot determination and parking lot identifier identification based on execution of a trained Artificial Intelligence (AI) model in accordance with an embodiment of the present disclosure;
FIG. 3 is a diagram that represents a vehicle of the system environment of FIG. 1 equipped with a plurality of cameras in accordance with an embodiment of the present disclosure;
FIGS. 4A - 4D are diagrams that illustrate various fields of view captured by the plurality of cameras equipped on the vehicle in accordance with an embodiment of the present disclosure; and
FIGS. 5A and 5B collectively represent a flowchart that illustrates identification of a parking lot identifier associated with a parking location of the vehicle in a parking lot and communication of the parking lot identifier to a communication device associated with the vehicle in accordance with an embodiment of the present disclosure.

### DETAILED DESCRIPTION

The detailed description of the appended drawings is intended as a description of the embodiments of the present disclosure, and is not intended to represent the only form in which the present disclosure may be practiced. It is to be understood that the same or equivalent functions may be accomplished by different embodiments that are intended to be encompassed within the spirit and scope of the present disclosure.

Parking lots are designed to accommodate a large number of vehicles and can be distributed across multiple zones, levels, or sections. While parking lots offer a convenient means of parking, vehicle users often experience difficulty locating parked vehicles, especially in large or unfamiliar environments such as multi-level basement parking lots. Vehicle users typically rely on nearby landmarks, signs, pillars with identifiable location markers, or other visual cues that aid in remembering parking locations of their vehicles. However, this approach depends on vehicle users remembering parking location details, which can be unreliable, especially when the vehicle users are in a hurry or distracted. This may lead to time-consuming efforts by the vehicle users to locate their parked vehicles.

In some cases, vehicle users rely on vehicle locator applications that utilize Global Positioning System (GPS) or Bluetooth technology. However, in multi-level basement parking lots, GPS signals are weak or completely unavailable due to the surrounding concrete structure and limited satellite visibility, which may make locating parked vehicles difficult for vehicle users. Bluetooth-based solutions may also present limitations, as the effective communication range is typically restricted to approximately 30 to 50 feet. This restricted distance may make Bluetooth-based vehicle locator applications unsuitable for large parking lots. Therefore, conventional techniques for locating parked vehicles may sometimes be unreliable, inefficient, and time-consuming.

Various embodiments of the present disclosure disclose a system included in a vehicle. In an example, the system may be an in-vehicle infotainment system. The system may include a processor and a memory coupled to the processor. The processor may detect when a speed of the vehicle reaches below a threshold value. Based on the detection that the speed of the vehicle has reached below the threshold value, the processor may identify a parking lot identifier associated with a parking location of the vehicle in a parking lot. The processor may then generate a notification, which includes the identified parking lot identifier, for a communication device associated with the vehicle. By monitoring the speed of the vehicle and detecting when the speed falls below the threshold value, indicating that the vehicle is either parked or ready for parking, the system may accurately identify the associated parking lot identifier. Accordingly, the system may eliminate the need for a vehicle user to remember the parking location or use a vehicle locator application to locate the parked vehicle. The vehicle user can easily locate the vehicle in the parking lot utilizing the parking lot identifier included in the notification.

In some embodiments, the processor may obtain a set of images from video streams captured by a camera system associated with the vehicle, based on detecting that the speed of the vehicle has reached below the threshold value. The processor may then determine that the vehicle is in the parking lot based on the obtained set of images. After the successful determination, the processor may proceed to identify the parking lot identifier. Thus, the system may trigger the identification of the parking lot identifier when the vehicle slows down within the parking lot, which serves as an indication of a potential parking event. Such targeted identification of the parking lot identifier may help conserve computational resources and energy by avoiding unnecessary processing when the vehicle slows down in non-parking scenarios.

In some embodiments, the processor may establish a communication session with the communication device and transmit the notification to the communication device via the established communication session. For example, the communication session may be a Bluetooth session established based on a Message Access Profile. In some embodiments, instead of directly transmitting the notification to the communication device, the processor may transmit an encoded version of the notification to a cloud server with which the communication device is synchronized. Such transmission of the encoded version of the notification to the cloud server may enable availability of the notification to the communication device. In an example, the notification may be at least one of a group consisting of a text message, an image-based message, and an audio-based message. In this manner, regardless of whether the communication device is within a communication range of the vehicle or not, the notification can be automatically made available to the communication device when the vehicle has been parked or is about to be parked, without requiring manual input or user intervention.

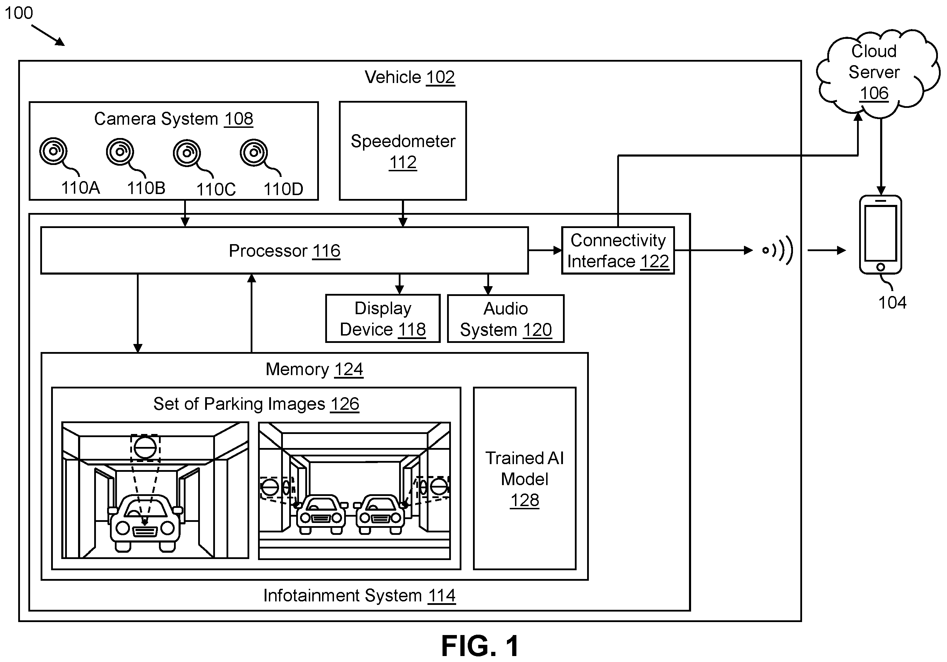

FIG. 1 illustrates a schematic diagram of a system environment 100 in accordance with an embodiment of the present disclosure. The system environment 100 may include a vehicle 102, a communication device 104, and a cloud server 106, in communication with each other.

The vehicle 102 may be any means of transportation, including but not limited to a car, a truck, a motorcycle, a bus, or other transport means. For ease of description and illustration, the vehicle 102 is described as a car in the present disclosure. In an example, the vehicle 102 may be an autonomous vehicle. In some examples, the vehicle 102 may be an advanced driver assistance vehicle. In other examples, the vehicle 102 may be non-autonomous or may lack advanced driver assistance features. The communication device 104 may be any electronic device equipped with communication capabilities. The communication device 104 may be associated with a user operating or occupying the vehicle 102, and may include, but is not limited to, a smartphone, a tablet, a smartwatch, a laptop computer, or the like. The user may interchangeably be referred to as "vehicle user".

The cloud server 106 may be a physical or cloud data processing system on which a server program runs. The cloud server 106 may be implemented in hardware, software, or a combination thereof. In an embodiment, the cloud server 106 may be implemented as a computer program executed on a programmable system, such as a personal computer, a laptop, or a network of computer systems. The cloud server 106 may be associated with a cloud storage account configured to store data related to the vehicle 102 and the communication device 104. In further embodiments, the communication device 104 may be synchronized with the cloud server 106, enabling secure access to the cloud storage account and the data associated with the vehicle 102 and the communication device 104. For example, the communication device 104 may be synchronized with the cloud server 106 to enable real-time data exchange and backup.

In an embodiment, the vehicle 102 may include a camera system 108, a speedometer 112, and an infotainment system 114 (also referred to as in-vehicle infotainment system 114), in communication with each other. Additionally, the vehicle 102 may include one or more sensors, such as Light Detection and Ranging (LiDAR), Ultrasonic sensors, Inertial Measurement Unit (IMU), or the like.

The camera system 108 may be a 360-degree camera system configured to provide a continuous video feed (interchangeably referred to as the 360-degree camera feed), capturing an entire surrounding of the vehicle 102. The 360-degree camera feed may provide a cohesive and comprehensive view of the environment around the vehicle 102. In an embodiment, the camera system 108 may include a plurality of cameras mounted around the vehicle 102 to capture images and/or videos of surroundings of the vehicle 102. As shown in FIG. 1, the camera system 108 may include a front camera 110A, a rear camera 110B, a left-side camera 110C, and a right-side camera 110D. Each of the front camera 110A, the rear camera 110B, the left-side camera 110C, and the right-side camera 110D may be implemented as wide-angle cameras to provide an expanded field of view of the surroundings of the vehicle 102. The front camera 110A, the rear camera 110B, the left-side camera 110C, and the right-side camera 110D may be positioned in such a way that the front camera 110A, the rear camera 110B, the left-side camera 110C, and the right-side camera 110D collectively or individually capture a 360-degree or a near 360-degree view around the vehicle 102.

In an embodiment, the front camera 110A may be mounted on or within a front-facing portion of the vehicle 102, such as within a front grille, a front bumper, or an adjacent component. The rear camera 110B may be mounted above, proximate to, or integrated into a license plate holder, a trunk lid, or a rear bumper of the vehicle 102. The left-side camera 110C may be positioned beneath a left-side mirror or integrated into a side panel or door frame of the vehicle 102. Similarly, the right-side camera 110D may be positioned beneath a right-side mirror or integrated into a corresponding side panel or door frame of the vehicle 102. Each of the front camera 110A, the rear camera 110B, the left-side camera 110C, and the right-side camera 110D may be operable to continuously capture images or video streams corresponding to a respective field of view. The left-side camera 110C and the right-side camera 110D may, collectively, be referred to as side cameras 110C and 110D. In an embodiment, the camera system 108 may transmit the images or the video streams associated with the vehicle 102 to the infotainment system 114. In an example, the video streams may be compressed to reduce bandwidth usage when transmitting the video streams to the infotainment system 114.

Although the camera system 108 is described herein as comprising four cameras, for example, the front camera 110A, the rear camera 110B, the left-side camera 110C, and the right-side camera 110D, alternative embodiments are contemplated in which the camera system 108 may include a greater or lesser number of cameras. For example, additional cameras may be mounted at different locations on the vehicle 102 to provide enhanced visibility, or the camera system 108 may include fewer cameras based on design constraints or intended functionality. The number, type, placement, and orientation of the cameras may be adapted based on the specific application requirements and configuration of the vehicle 102.

In an embodiment, the speedometer 112 may be a device configured to measure and display a current speed at which the vehicle 102 is traveling. The speedometer 112 may be in communication with the infotainment system 114. The speedometer 112 may provide data associated with the speed of the vehicle 102 (hereinafter referred to as "speed data") to the infotainment system 114. The speed data may be measured and transmitted continuously or periodically to the infotainment system 114.

The infotainment system 114 may include hardware and/or software components configured to enable interaction with various subsystems of the vehicle 102, such as the camera system 108 and the speedometer 112. For example, the infotainment system 114 may be an Internet-enabled system. The infotainment system 114 may be integrated with a Controller Area Network (CAN) bus of the vehicle 102. The infotainment system 114 may be configured to continuously or periodically receive the speed data from the speedometer 112. The received speed data may be utilized by one or more applications associated with the infotainment system 114. For example, a navigation system of the vehicle 102 may utilize the speed data to adjust an estimated arrival time, enable speed-dependent volume control, or perform similar functions.

In an embodiment, the infotainment system 114 may be configured to identify a parking lot identifier associated with a parking location of the vehicle 102 in a parking lot by utilizing the images or video streams captured by the camera system 108. The infotainment system 114 may be further configured to generate a notification for the communication device 104. The notification may include the parking lot identifier that enables identification, by the vehicle user, of the parking location within the parking lot where the vehicle 102 is parked or about to be parked.

In an example, the parking lot may refer to a designated area intended for temporary parking of the vehicle 102. The parking lot may include, but is not limited to, an open surface area, an underground or basement parking facility, a multi-level parking structure, or any other type of designated vehicle parking area. The parking location may refer to a specific area within the parking lot where the vehicle 102 may be parked. The parking location may be identified by the parking lot identifier, which may include, for example, a section indicator, a zone indicator, a pillar identifier, a level indicator, a unique parking space position indicator ("position"), or any combination thereof. In one example, the parking lot identifier may include alphanumeric characters to distinguish the parking location uniquely. In non-limiting examples, parking lot identifiers may include formats such as "B-3/U-16", "LB-52/B-613", "Z2-101", and similar variations. For example, the parking lot identifier "B-3/U-16" refers to basement level "3", block "U", and position "16". The parking lot identifier "LB-52/B-613" refers to lower basement "52", block "B", and position "613". The parking lot identifier "Z3-101" refers to zone "2" and position "102". For ease of description and illustration, the parking lot is described as the basement parking facility in the present disclosure. The manner in which the infotainment system 114 identifies the parking lot identifier associated with the parking location of the vehicle 102 in the parking lot and generates the notification for the communication device 104 is discussed in greater detail in later sections.

In an embodiment, the infotainment system 114 may include a processor 116, a display device 118, an audio system 120, a connectivity interface 122, and a memory 124. The processor 116 may be any general-purpose processor or a microprocessor with Artificial Intelligence (AI)/Machine Learning (ML) capabilities configured to execute a set of instructions. For example, the processor 116 may be a processor core, a multiprocessor, a reconfigurable processor, a microcontroller, a controller, a state machine, gated logic, a discrete hardware component, any other processing unit, or any combination thereof. In an embodiment, the processor 116 may correspond to multiple processing units, a single processing core, multiple processing cores, special-purpose processing cores, co-processors, or any combination thereof. The processor 116 may be communicatively coupled to the display device 118, the audio system 120, the connectivity interface 122, and the memory 124. The processor 116 may be part of an edge computing platform that integrates hardware-based neural processing units or similar components to accelerate machine learning applications at the edge.

The display device 118 may be a user interface for the infotainment system 114. The display device 118 may include a Graphical User Interface (GUI) and may be configured to display information such as navigation maps, media controls, system settings, and vehicle diagnostics. In some embodiments, the display device 118 may be capable of rendering high-definition video, supporting multi-window displays, or integrating with Augmented Reality (AR) systems. In an embodiment, the display device 118 may display the images and/or video streams captured by the camera system 108.

In an embodiment, the audio system 120 may include a plurality of speakers and may be configured to play media content, generate system alerts, and facilitate interactions with a voice assistant.

The connectivity interface 122 may include one or more communication modules configured to support wireless and/or wired communication protocols, such as Bluetooth, Wi-Fi, Near Field Communication (NFC), cellular networks (e.g., 4G/5G), and Vehicle-to-Everything (V2X) communication. The connectivity interface 122 may enable the infotainment system 114 to communicate with external devices, such as the cloud server 106 and the communication device 104. The infotainment system 114 may be configured to register details associated with the communication device 104 and the vehicle 102 in the memory 124. In a non-limiting example, the infotainment system 114 may be configured to register a phone number associated with the communication device 104. During the registration process, appropriate permissions must be granted to access messaging capabilities, transmit audio and image data, and retrieve the phone number of the communication device 104 for the purpose of transmitting the notification to the communication device 104.

In an embodiment, the infotainment system 114 and the communication device 104 may support Bluetooth Message Access Profile (MAP) profile. For example, the infotainment system 114 and the communication device 104 may be paired via Bluetooth such that the MAP profile may be enabled. The infotainment system 114 may use a Bluetooth MAP protocol to access and manage messaging features of the communication device 104. The infotainment system 114 may communicate with the communication device 104 via the Bluetooth MAP protocol.

In an embodiment, the memory 124 may include non-volatile memories such as a Read-Only Memory (ROM), a Programable Read-Only Memory (PROM), an Erasable Programmable Read-Only Memory (EPROM), a flash memory, or any other device capable of storing program instructions or data with or without applied power. The memory 124 may also include volatile memories, such as a Random-Access-Memory (RAM), a Static Random-Access-Memory (SRAM), a Dynamic Random-Access-Memory (DRAM), and a Synchronous Dynamic Random-Access-Memory (SDRAM). In various embodiments, the memory 124 may include a processor-internal memory. The memory 124 may further include external memory modules connected via memory interfaces or buses, or embedded memory integrated within System-On-Chip (SoC) architectures. The memory 124 may include a single memory module or a combination of multiple memory components distributed across different system elements in the vehicle 102. While the memory 124 is depicted as part of the infotainment system 114, in some embodiments, the memory 124 may be external to the infotainment system 114.

In an embodiment, the memory 124 may store information that can be accessed by the processor 116. For example, the memory 124 may include computer-readable instructions that can be executed by the processor 116. The computer-readable instructions may be software codes written in any suitable programming language or may be implemented in hardware. Additionally, or alternatively, the computer-readable instructions may be executed in logically and/or virtually separate threads on the processor 116. For example, the memory 124 may store instructions that, when executed by the processor 116, cause the processor 116 to perform operations such as any of the operations and functions for which the infotainment system 114 is configured, as described herein.

In an embodiment, the memory 124 may store a set of parking images 126 (interchangeably referred to as "the set of images 126") associated with the vehicle 102. The set of parking images 126 may be visual representations of the parking location of the vehicle 102 in the parking lot, captured by the camera system 108. In an embodiment, the memory 124 may further include a trained AI model 128. The trained AI model 128 may be capable of determining that the vehicle 102 is in the parking lot based on parking layout attributes in the set of parking images 126. The parking layout attributes may include at least one of a group consisting of an intensity of light, a presence of alphanumeric characters, and structural cues, in the obtained set of images.

In an example, the trained AI model 128 may determine that the vehicle 102 is in the parking lot based on the detection of ambient lighting, pillars, and/or alphanumeric characters. For example, the presence of ambient lighting may indicate an indoor or covered environment, such as a parking lot. The detection of structural elements such as pillars may support the identification of the parking lots. Additionally, the appearance of alphanumeric characters, such as "B-3/U-16", "LB-52/B-613", and "Z2-101", may correspond to labeled parking sections or zones in the parking lot. In an example, the alphanumeric characters may represent a plurality of parking lot identifiers associated with the parking lot. In an embodiment, the trained AI model 128 may further be configured to identify a parking lot identifier of the parking location in the parking lot where the vehicle 102 is about to be parked or has been parked. The manner in which the trained AI model 128 determines that the vehicle 102 is in the parking lot and identifies the parking lot identifier of the parking location where the vehicle 102 is about to be parked or has been parked is described in greater detail later in the description.

Although the trained AI model 128 is depicted as residing in the memory 124, in some embodiments, the trained AI model 128 may be implemented outside of the memory 124, such as on a remote server (for example, the cloud server 106) or an external computing resource.

### Vehicle Speed Detection

As the vehicle 102 is traveling, the processor 116 may receive real-time or near real-time speed data associated with the vehicle 102 from the speedometer 112. The processor 116 may utilize the speed data to detect that the speed of the vehicle 102 has reached below a threshold value. In an embodiment, the processor 116 may configure a polling interval to detect whether the speed of the vehicle 102 has reached below the threshold value. In a non-limiting example, the polling interval may be set at 50 milliseconds (ms). For example, processor 116 may detect the speed of the vehicle 102 at an interval of 50 ms. The detection that the speed of the vehicle 102 has reached below the threshold value may indicate that the vehicle 102 is slowing down or has come to a stop. In an example, the vehicle 102 may slow down or stop due to conditions such as traffic congestion, parking, traffic signals, road obstacles, or a drive-through zone, among others. In an example, the threshold value may be set to 5 kilometers per hour (kmph). However, in other embodiments, the threshold value may be different. In an embodiment, the threshold value may be stored in the memory 124. The processor 116 may be configured to retrieve the threshold value from the memory 124 to perform the speed-based detection.

Once the processor 116 detects that the speed of the vehicle 102 has reached below the threshold value, the processor 116 may evaluate the cause of the reduced speed of the vehicle 102. For example, the evaluation may include determining whether the speed of the vehicle 102 has reached below the threshold value due to the vehicle 102 being parked or other conditions.

### Communication Session Establishment

In an embodiment, the processor 116 may be configured to establish a communication session with the communication device 104 based on the detection that the speed of the vehicle 102 has reached below the threshold value. In an example, the communication session may be a Bluetooth session established based on a Message Access Profile or any near-field communication session. The processor 116 may be configured to use the phone number associated with the communication device 104 to establish the communication session.

### Parking Lot Determination

In an embodiment, based on the detection that the speed of the vehicle 102 has reached below the threshold value, the processor 116 may receive video streams from the camera system 108 associated with the vehicle 102 at defined time intervals. In an example, the processor 116 may receive the video streams from the camera system 108 every 5 seconds. In an example, the received video streams may include multiple images associated with the vehicle 102. The processor 116 may then obtain a set of images from the video streams captured by the camera system 108. In one example, the set of images may include one or more images. In an embodiment, the processor 116 may process the video streams by executing one or more algorithms configured to combine individual images of the video streams to generate a single, cohesive 360-degree view of the environment surrounding the vehicle 102.

As described above, the video streams may be displayed on the display device 118. The processor 116 may capture one or more snapshots from the video streams being rendered on the display device 118. In an example, the processor 116 may capture the one or more snapshots from the video streams every 250 ms.

The processor 116 may store the set of images as the set of parking images 126 in the memory 124. In some embodiments, the stored set of parking images 126 may be dynamically updated. For example, the processor 116 may replace one or more previously stored images with other images obtained from the video streams.

In an embodiment, in response to obtaining the set of parking images 126, the processor 116 may detect the parking layout attributes in the set of parking images 126. As described above, the parking layout attributes may include at least one of a group consisting of an intensity of light, a presence of alphanumeric characters, and structural cues, in the set of parking images 126. The alphanumeric characters may represent a plurality of parking lot identifiers associated with the parking lot. For example, if ambient lighting and multiple pillars are detected in the set of parking images 126, the processor 116 may infer that the set of parking images 126 corresponds to a parking lot. The processor 116 may thus determine that the vehicle 102 is in the parking lot based on the parking layout attributes in the set of parking images 126.

In some embodiments, the processor 116 may execute the trained AI model 128 on the set of parking images 126 to determine that the vehicle 102 is in the parking lot. In some embodiments, the processor 116 may host the trained AI model 128. As described above, the memory 124 may store the trained AI model 128, making the trained AI model 128 locally available for execution by the processor 116. In an embodiment, the processor 116 may transmit a request to the trained AI model 128 to initiate inference for determining that the vehicle 102 is in the parking lot. The trained AI model 128 may be configured to determine that the vehicle 102 is in the parking lot based on the parking layout attributes in the set of parking images 126. In a non-limiting example, the trained AI model 128 may be configured to determine that the vehicle 102 is in the parking lot based on the detection of ambient lighting, pillars, alphanumeric characters, or various other structural cues that are indicative of a parking lot, in the set of parking images 126. In an example, the trained AI model 128 may be configured to initiate inference for determining that the vehicle 102 is in the parking lot, when the speed of the vehicle 102 reaches below the threshold value.

### Parking Lot Identifier Identification

In an embodiment, after the determination that the vehicle 102 is in the parking lot, the processor 116 may identify a parking lot identifier associated with the parking location of the vehicle 102 in the parking lot. In an example, the processor 116 may identify the parking lot identifier based on the determination that the vehicle 102 is in the parking lot. The identified parking lot identifier may include at least one parking lot identifier, from the plurality of parking lot identifiers, that has a higher resolution than remaining parking lot identifiers, of the plurality of parking lot identifiers, in the set of parking images 126. For example, the processor 116 may identify, from the set of parking images 126, that the parking lot identifier "B-3/U-16" is associated with the parking location of the vehicle 102 in the parking lot. The processor 116 may detect multiple parking lot identifiers within the set of parking images 126, but determine that "B-3/U-16" appears with higher resolution (for example, higher pixel density, sharper edge definition, or better contrast) compared to the remaining parking lot identifiers within the set of parking images 126. The higher resolution may result from the parking lot identifier "B-3/U-16" being physically closer to the vehicle 102 or captured at a shorter distance by the camera system 108, making the parking lot identifier "B-3/U-16" more prominent than the remaining parking lot identifiers within the set of parking images 126. The processor 116 may use the higher resolution as a cue to extract the parking lot identifier "B-3/U-16" using optical character recognition (OCR) or other image processing techniques from the set of parking images 126. Accordingly, the identified parking lot identifier "B-3/U-16" may have the highest resolution in the set of parking images 126 in comparison to the remaining parking lot identifiers. The parking lot identifier "B-3/U-16" may represent that the vehicle 102 is parked at a basement level "3", block "U", and position "16" of the parking lot.

In an embodiment, the processor 116 may execute the trained AI model 128 to identify the parking lot identifier. In some embodiments, the processor 116 may transmit a request to the trained AI model 128 to initiate inference for identifying the parking lot identifier. The trained AI model 128 may identify the parking lot identifier in the set of parking images 126 based on the method described above. Although the parking lot identifier is described herein as including alphanumeric characters, in some embodiments, the parking lot identifier may include any form of symbol, code, pattern, or other distinguishing identifier suitable for uniquely identifying a parking location of the vehicle 102 in the parking lot.

In an embodiment, a revolving buffer (such as a circular buffer) may be used to store the set of parking images 126. A size of the revolving buffer may be configured based on one or more input requirements of the trained AI model 128. For example, if the trained AI model 128 uses a temporal window of N consecutive image frames to perform parking lot determination or parking lot identifier identification, the revolving buffer may be configured to hold at least N image frames. Such configuration may allow the trained AI model 128 to receive a sequence of contextually relevant image frames (e.g., the set of parking images 126) at the time of inference. In an example, if the AI model 128 operates on a temporal input window of 10 image frames, the revolving buffer may be configured to store the latest 10 captured images from the video streams in a first-in, first-out (FIFO) manner. Such configuration may enable the processor 116 to maintain a rolling context of the surroundings of the vehicle 102, which may reduce memory utilization of the memory 124.

In some embodiments, the processor 116 may be configured to identify a mode of parking of the vehicle 102. In an example, the mode of parking may include at least one of a group consisting of a forward parking mode and a reverse parking mode. In an example, the processor 116 may utilize the one or more sensors of the vehicle 102 to identify the mode of parking of the vehicle 102. Once the mode of parking of the vehicle 102 is identified, the processor 116 may select video streams from corresponding cameras of the camera system 108 of the vehicle 102, to identify the parking lot identifier. In an example, if the mode of parking of the vehicle 102 is identified to be the forward parking mode, the processor 116 may select video streams captured by the front camera 110A, the left-side camera 110C, and the right-side camera 110D for identification of the parking lot identifier. In some examples, if the mode of parking of the vehicle 102 is identified to be the reverse parking mode, the processor 116 may select video streams captured by the rear camera 110B, the left-side camera 110C, and the right-side camera 110D for identification of the parking lot identifier.

In further examples, based on the location of parking lot identifiers such as on pillars, walls, or overhead signage, the processor 116 may select video streams captured by the rear camera 110B even in the forward parking mode, or by the front camera 110A in the reverse parking mode, if the respective camera provides better visibility or clarity of the parking lot identifiers. Such adaptive selection may enable the processor 116 to utilize relevant video streams for accurate identification of the parking lot identifier.

In some embodiments, when a designated parking lot identifier is unavailable or not detected by the processor 116, the processor 116 may utilize the nearest available landmark, marker, or identifiable structure as the parking lot identifier for the parking location of the vehicle 102 within the parking lot. This fallback mechanism may enable the processor 116 to determine the parking location of the vehicle 102 even in the absence of designated parking lot identifiers.

### Automatic Notification Generation and Transmission

In an embodiment, the processor 116 may generate an automatic notification that includes the identified parking lot identifier for the communication device 104 associated with the vehicle 102. In one example, the notification may be generated to inform the vehicle user of the vehicle 102 about the parking location of the vehicle 102. As described in the foregoing description, the processor 116 may be configured to register details associated with the communication device 104 in the memory 124 prior to the identification of the parking lot identifier for the vehicle 102. In an example, the processor 116 may generate the notification for the communication device 104 based on the registered details associated with the communication device 104 in the memory 124.

Also, as described previously, the processor 116 may establish the communication session with the communication device 104 based on the detection that the speed of the vehicle 102 has reached below the threshold value. According to some embodiments, the processor 116 may determine that the speed of the vehicle 102 has reached a predefined value that is lower than the threshold value. The processor 116 may identify that the vehicle 102 has been parked or is about to be parked based on the speed of the vehicle 102 reaching the predefined value, to generate the notification. In an example, the predefined value may be 2 kmph. In other examples, the predefined value may be different. Thus, the processor 116 may establish the communication session with the communication device 104 when the speed of the vehicle 102 reaches below the threshold value (e.g., when a parking spot is being searched in the parking lot), whereas the notification is generated when the speed of the vehicle 102 reduces further and falls below the predefined value (e.g., when the vehicle 102 has been parked or is about to be parked).

In an embodiment, the processor 116 may automatically transmit the notification to the communication device 104 via the established communication session. In an example, the notification may be at least one of a group consisting of a text message, an image-based message, and an audio-based message. For example, a text message-based notification may state "The vehicle (Registration No. [XYZ-123]) is parked at Pillar B-3/U-16". In an example, the processor 116 may automatically transmit the text-based message to the communication device 104 associated with the vehicle 102 via Short Messaging Service (SMS), push notification, or messaging application interface. In an example, in the case where the notification is an image-based message, the processor 116 may automatically transmit an image of the pillar having the parking lot identifier "B-3/U-16" to the communication device 104 associated with the vehicle 102 via Multimedia Messaging Service (MMS), push notification, or messaging application interface. Also, in the case where the notification is an audio-based message, the processor 116 may automatically transmit an audio message having details of the parking lot identifier "B-3/U-16" to the communication device 104 associated with the vehicle 102 via a voice call or any other suitable means.

In an embodiment, the infotainment system 114 of the vehicle 102 may minimize the distraction of a driver (for example, the vehicle user) of the vehicle 102 while allowing communication features such as messaging and ensuring compliance with safety regulations. However, regulatory boards may permit the auto-generated notification that does not require manual intervention. Hence, the processor 116 may trigger the automatic notification to the communication device 104 as part of a shutdown sequence of the vehicle 102. In an example, the shutdown sequence of the vehicle 102 may begin when the vehicle user turns off the ignition of the vehicle 102. In some examples, the infotainment system 114 may power down as soon as the ignition of the vehicle 102 is turned off to prevent battery of the vehicle 102 from draining. In further examples, the infotainment system 114 may be switched ON for a few minutes or until a specific action occurs. In an example, the information system may be ON until the notification is transmitted to the communication device 104 of the vehicle user. Accordingly, the processor 116 may transmit the notification to the communication device 104 in a case where the speed of the vehicle 102 reaches the predefined value (for example, when the speed of the vehicle 102 reduces close to zero, and even before the shutdown sequence starts).

In some embodiments, the processor 116 may be configured to transmit the notification to the communication device 104 via the cloud server 106. The processor 116 may upload a screenshot of the parked location of the vehicle 102 to the cloud storage account associated with the cloud server 106. In an example, the screenshot may include the parking lot identifier associated with the parking location of the vehicle 102 in the parking lot. The communication device 104 may be synchronized to the same cloud storage account as the cloud server 106, and the vehicle user may retrieve the parked location of the vehicle 102 utilizing the screenshot. In an embodiment, the processor 116 may be configured to transmit an encoded version of the notification to the cloud server 106 based on a synchronization between the communication device 104 and the cloud server 106. The transmission of the encoded version of the notification to the cloud server 106 may enable availability of the notification to the communication device 104. In an example, the encoded version of the notification may refer to an encrypted notification. For example, the processor 116 may encrypt the notification using an encryption technique for secure communication. The encryption may be intended to protect the contents of the notification from unauthorized access or interception during transmission, thereby maintaining data confidentiality and integrity. Therefore, the vehicle user of the vehicle 102 may be enabled to efficiently locate the vehicle 102 in the parking lot using the parking lot identifier without manual intervention.

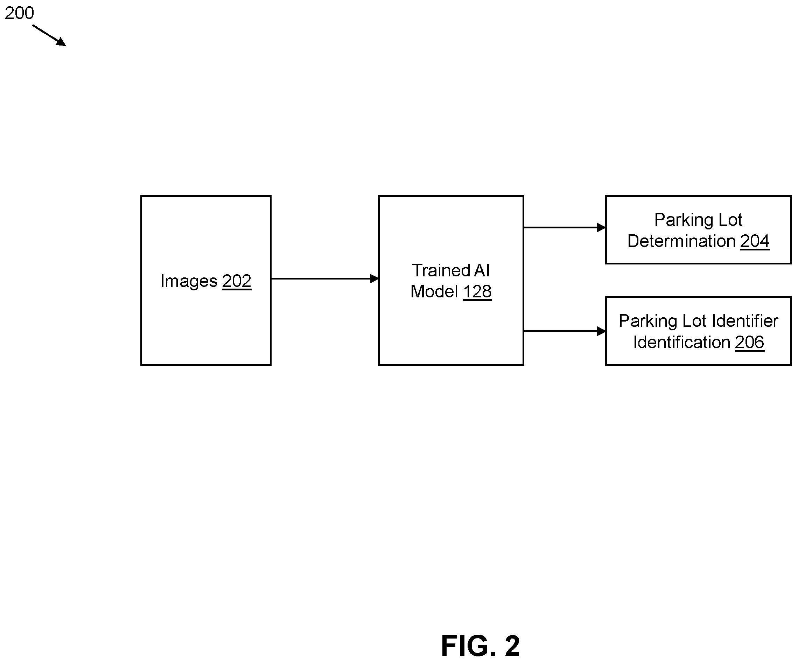

FIG. 2 is a block diagram that illustrates a process 200 of parking lot determination and parking lot identifier identification based on execution of the trained AI model 128 of FIG. 1 in accordance with an embodiment of the present disclosure.

In an embodiment, images 202 captured by a camera system (for example, the camera system 108 of FIG.1) associated with the vehicle 102 may be utilized by the trained AI model 128 for initiating a parking lot determination process 204 and a parking lot identifier identification process 206. In an example, the images 202 may be captured by one or more cameras of the camera system 108. In an example, if the speed of the vehicle 102 drops below the threshold value, a processor (for example, the processor 116) may initiate a request to the trained AI model 128 to start the parking lot determination process 204. According to the parking lot determination process 204, the trained AI model 128 may determine that the vehicle 102 is in the parking lot based on parking layout attributes in the images 202. The parking layout attributes may include at least one of a group consisting of an intensity of light, a presence of alphanumeric characters, and structural cues, in the images 202. The alphanumeric characters may represent a plurality of parking lot identifiers associated with a parking lot. In an example, the trained AI model 128 may have been trained to detect and interpret the parking layout attributes within the images 202 to identify visual patterns associated with parking environments. For example, the trained AI model 128 may determine that consistent lighting intensity, appearance of alphanumeric characters such as "B-2" or "Zone A," and presence of structural elements such as parking lines, pillars, or wall-mounted signage indicate a parking lot. By analyzing the parking layout attributes in combination, the trained AI model 128 may classify the surrounding area of the vehicle 102 as a parking lot.

Once it is determined that the vehicle 102 is in the parking lot, the processor 116 may initiate a request to the trained AI model 128 to start the parking lot identifier identification process 206. Performing the parking lot determination process 204 prior to starting the parking lot identifier identification process 206 may reduce computational overhead. For example, by confirming the presence of a valid parking layout based on various structural and visual cues (e.g., the parking layout attributes), the processor 116 may ensure that the subsequent parking lot identifier identification process 206 is only executed in relevant contexts. Such a hierarchical inference approach may allow the trained AI model 128 to filter out non-parking environments, thereby conserving power and processing resources, and improving inference efficiency.

The trained AI model 128 may identify a parking lot identifier, from the plurality of parking lot identifiers, that has a higher resolution than the remaining parking lot identifiers, of the plurality of parking lot identifiers, in the images 202. The parking lot identifier may be associated with a parking location of the vehicle 102 in the parking lot.

In an embodiment, the trained AI model 128 may be trained on the images 202 to identify a parking lot identifier associated with the parking location of a vehicle (for example, the vehicle 102) in a parking lot. In a parking lot, each vehicle may occupy a partitioned space that is separated by pillars. In such cases, the parking lot identifiers displayed on the pillars may be identical for adjacent spaces. An image from among the images 202 may include one such parking lot identifier. In some examples, if a parking lot accommodates multiple vehicles within a single partitioned space, a parking lot identifier may be displayed on a pillar that is shared by all vehicles within that partitioned space.

In further examples, a unique parking lot identifier may be displayed on a wall of the parking lot corresponding to each vehicle. The parking lot identifiers displayed on pillars may indicate zone numbers. In such cases, a parking lot identifier can be formed as a combination of a pillar identifier (zone number) and a wall identifier located in front of the vehicle 102. In some examples, a unique identifier may not be available for every vehicle. In such cases, the trained AI model 128 may consider any parking lot identifier that is in close proximity to the vehicle 102, with preference given to the parking lot identifier that has better resolution or clarity compared to other available parking lot identifiers. In some scenarios, a parking lot may not be separated by pillars, and parking lot identifiers may be mentioned on the floor. In this scenario, the trained AI model 128 may utilize images from a front camera (e.g., the front camera 110A) or a rear camera (e.g., the rear camera 110B) of the vehicle 102 to identify the parking lot identifier.

In an embodiment, once the parking lot identifier is identified, the processor 116 may generate an automatic message in an SMS format along with the parking lot identifier and transmit the message as part of a shutdown sequence or when the speed of the vehicle 102 is close to zero (e.g., a predefined value that is lower than the threshold value). In some examples, the message may be a custom or a user-defined message. For example, the processor 116 may customize the message according to the specific needs or preferences of a vehicle user. Other forms or variations of messages not explicitly discussed herein are also contemplated.

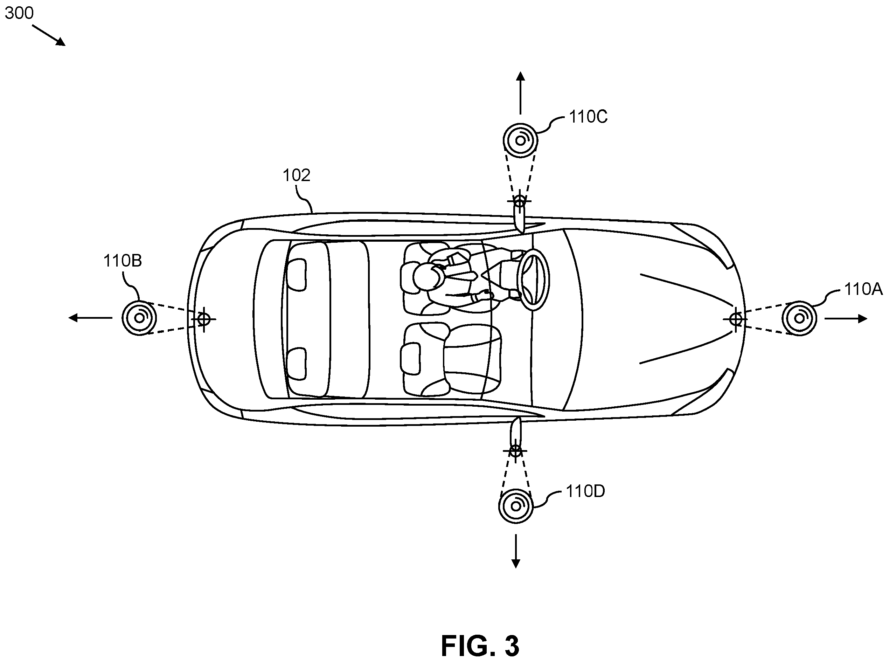

FIG. 3 is a diagram that represents the vehicle 102, which is equipped with a plurality of cameras in accordance with an embodiment of the present disclosure.

As shown in FIG. 3, the vehicle 102 includes the front camera 110A, the rear camera 110B, the left-side camera 110C, and the right-side camera 110D. In the embodiment shown in FIG. 3, the front camera 110A is mounted on or integrated into a front bumper of the vehicle 102, the rear camera 110B is mounted on or integrated into the rear bumper of the vehicle 102, the left-side camera 110C is mounted on or integrated into the left-side mirror of the vehicle 102, and the right-side camera 110D is mounted on or integrated into the right-side mirror of the vehicle 102. Each of the front camera 110A, the rear camera 110B, the left-side camera 110C, and the right-side camera 110D may be configured to continuously capture images or video streams corresponding to a respective field of view surrounding the vehicle 102. In an embodiment, the front camera 110A, the rear camera 110B, the left-side camera 110C, and the right-side camera 110D may have the capability to capture or record images or video streams of the surroundings of the vehicle 102, for example, when the vehicle 102 is about to be parked or has already been parked in a parking lot. In an embodiment, the front camera 110A, the rear camera 110B, the left-side camera 110C, and the right-side camera 110D may individually or collectively provide a 360-degree camera feed that may be utilized by an infotainment system of the vehicle 102 (for example, the infotainment system 114 of the vehicle 102) to identify a parking lot identifier of a parking location in the parking lot where the vehicle 102 is about to be parked or has already been parked.

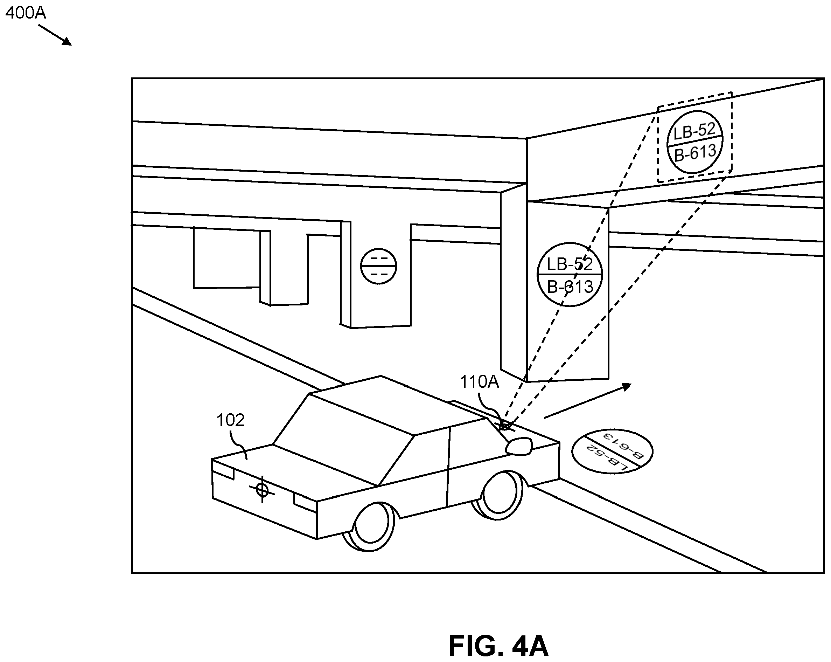

FIGS. 4A - 4D are diagrams that illustrate various fields of view captured by the plurality of cameras equipped on the vehicle 102 in accordance with an embodiment of the present disclosure.

Referring to FIG. 4A, an environment 400A is shown, which illustrates a parking lot where the vehicle 102 is parked. As illustrated in FIG. 4A, a wall within the parking lot displays the parking lot identifier "LB-52/B-613", which uniquely designates a specific parking location within the parking lot. In an embodiment, the parking lot identifier "LB-52/B-613" may be identified from one or more images or video streams captured by the front camera 110A mounted on the vehicle 102. Further, the parking lot identifier "LB-52/B-613" may be included in a notification for the communication device 104. The parking lot identifier "LB-52/B-613" may be used to determine the parking location of the vehicle 102 within the parking lot, thereby enabling efficient localization of the vehicle 102.

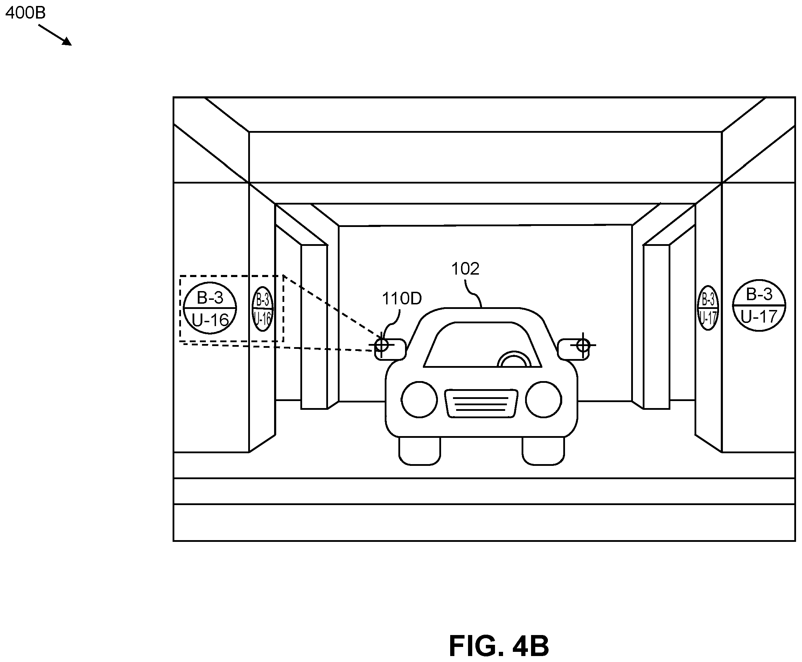

Referring to FIG. 4B, an environment 400B is shown, which illustrates the parking lot where the vehicle 102 is parked. As illustrated in FIG. 4B, a pillar within the parking lot displays a parking lot identifier "B-3/U-16", which uniquely designates a specific parking location within the parking lot. In an embodiment, the parking lot identifier "B-3/U-16" may be identified from one or more images or video streams captured by the right-side camera 110D mounted on the vehicle 102 and included in a notification for the communication device 104. The parking lot identifier "B-3/U-16" may be used to determine the parking location of the vehicle 102 within the parking lot.

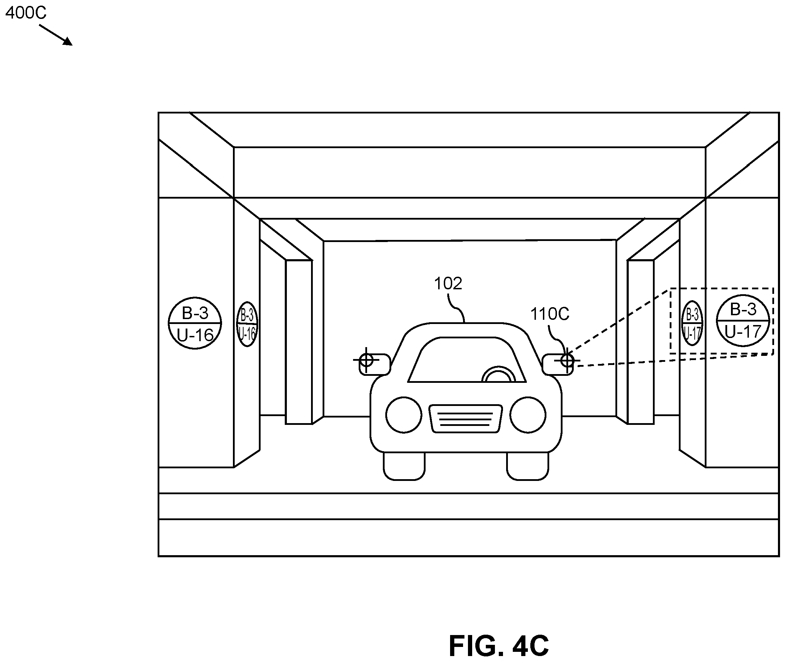

Referring to FIG. 4C, an environment 400C is shown, which illustrates the parking lot where the vehicle 102 is parked. As illustrated in FIG. 4C, a pillar within the parking lot displays a parking lot identifier "B-3/U-17", which uniquely designates a specific parking location within the parking lot. In an embodiment, the parking lot identifier "B-3/U-17" may be identified from one or more images or video streams captured by the left-side camera 110C mounted on the vehicle 102 and included in a notification for the communication device 104. The parking lot identifier "B-3/U-17" may be used to determine the parking location of the vehicle 102 within the parking lot.

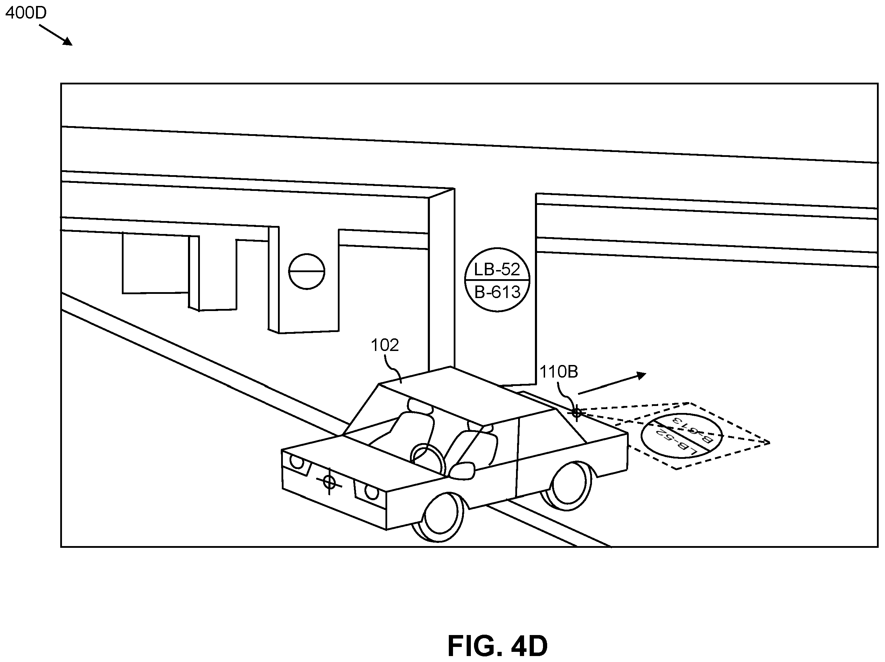

Referring to FIG. 4D, an environment 400D is shown, which illustrates the parking lot where the vehicle 102 is parked. As illustrated in FIG. 4D, floor within the parking lot displays a parking lot identifier "LB-52/B-613", which uniquely designates a specific parking location within the parking lot. In an embodiment, the parking lot identifier "LB-52/B-613" may be identified from one or more images or video streams captured by the rear camera 110B mounted on the vehicle 102 and included in a notification for the communication device 104. The parking lot identifier "LB-52/B-613" may be used to determine the parking location of the vehicle 102 within the parking lot.

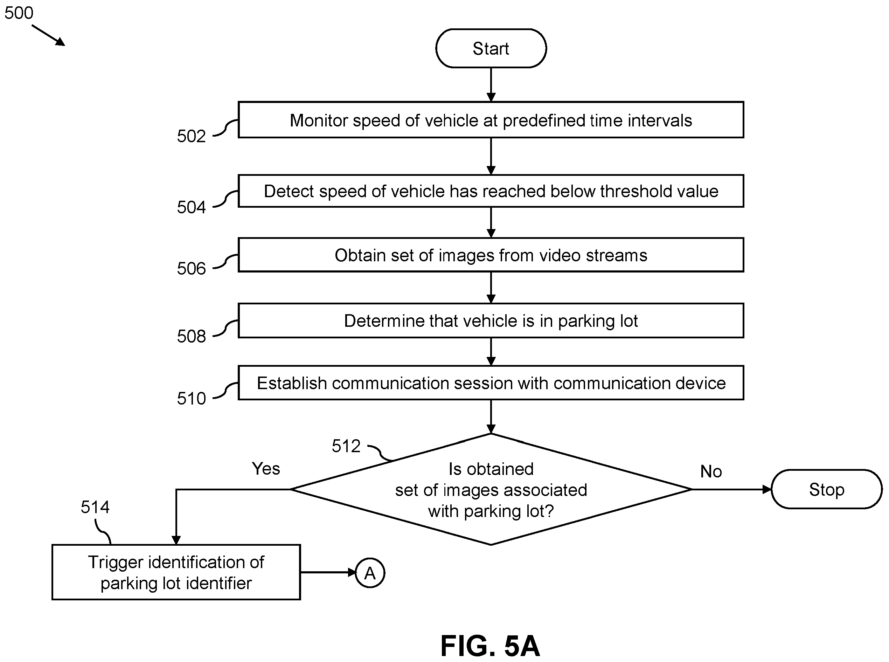

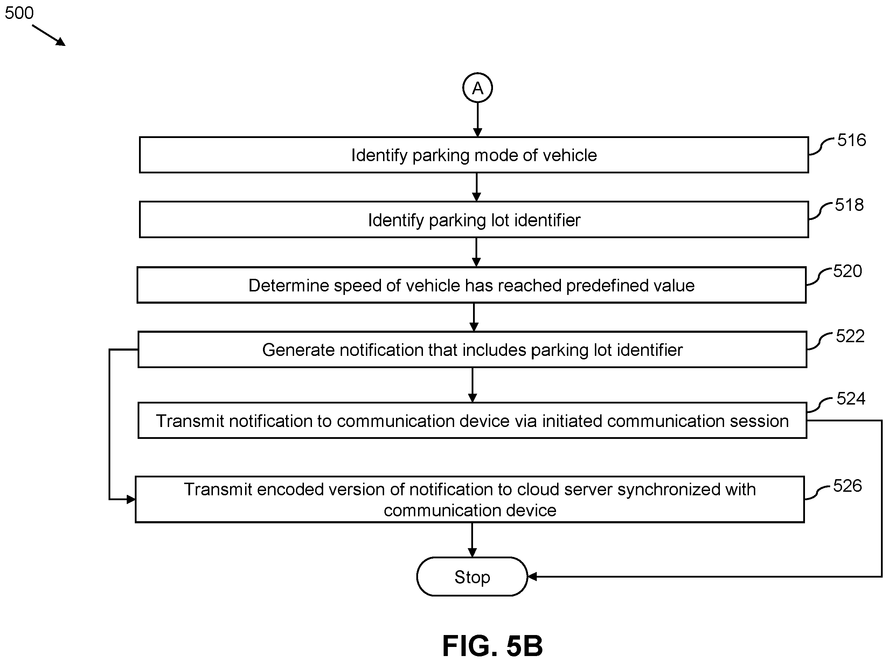

FIGS. 5A and 5B collectively represent a flowchart 500 that illustrates identification of the parking lot identifier associated with the parking location of the vehicle 102 in the parking lot and communication of the parking lot identifier to the communication device 104 associated with the vehicle 102 in accordance with an embodiment of the present disclosure. In an embodiment, operations in the flowchart 500 may be implemented in the processor 116 of the infotainment system 114.

Referring to FIG. 5A, at step 502, the processor 116 may monitor the speed of the vehicle 102 at predefined time intervals. In an example, the processor 116 may receive data associated with the speed of the vehicle 102 in real-time or near real-time from the speedometer 112. In an example, the processor 116 may monitor the speed of the vehicle 102 at every 5 ms interval. At step 504, the processor 116 may detect that the speed of the vehicle 102 has reached below the threshold value.

At step 506, the processor 116 may obtain the set of images 126 from the video streams received from the camera system 108 of the vehicle 102. In an example, the obtained set of images 126 may include one or more images of the surrounding of the vehicle 102. In an example, the obtained set of images 126 may provide a 360-degree view of the surroundings of the vehicle 102. At step 508, the processor 116 may determine that the vehicle 102 is in the parking lot. The processor 116 may determine that the vehicle 102 is in the parking lot based on parking layout attributes in the obtained set of images 126. In an example, the processor 116 may execute the trained AI model 128 to determine that the vehicle 102 is in the parking lot. The parking layout attributes may include at least one of a group consisting of an intensity of light, a presence of alphanumeric characters, and structural cues, in the obtained set of images 126. The alphanumeric characters may represent a plurality of parking lot identifiers associated with the parking lot. In an example, the processor 116 may determine that the vehicle 102 is in the parking lot based on the detection of ambient lighting, pillars, and/or alphanumeric characters. For instance, the presence of ambient lighting may indicate an indoor or covered environment, such as a parking lot. The detection of structural elements like pillars may support the identification of the parking lot, as such structural elements are commonly found in parking lots. Additionally, the appearance of alphanumeric characters, such as "B-3/U-16", "LB-52/B-613", "Z2-101", may correspond to labeled parking sections or zones in the parking lot.

At step 510, the processor 116 may establish the communication session with the communication device 104. In an embodiment, the processor 116 may be configured to establish the communication session with the communication device 104 based on the detection that the speed of the vehicle 102 has reached below the threshold value. In an example, the communication session may be a Bluetooth session established based on a Message Access Profile. The processor 116 may be configured to use the phone number associated with the communication device 104 to establish the communication session.

At step 512, the processor 116 may determine whether the obtained set of images is associated with the parking lot. If it is determined that the obtained set of images is not associated with the parking lot, the flowchart 500 terminates. If at step 512 it is determined that the obtained set of images is associated with the parking lot, the flowchart 500 may proceed to step 514. At step 514, the processor 116 may trigger an identification of a parking lot identifier associated with the parking location of the vehicle 102 in the parking lot. In an example, the processor 116 may transmit a request to the trained AI model 128 to initiate inference for parking lot identifier identification.

Referring to FIG. 5B, at step 516, the processor 116 may identify the parking mode of the vehicle 102. In an example, the parking mode may include at least one of group consisting of a forward parking mode and a reverse parking mode. Identification of the parking mode may aid in optimizing the selection of an appropriate camera in the camera system 108 for parking lot identification. For example, if the vehicle 102 is in the reverse parking mode, the processor 116 may use a video stream captured by the rear camera 110B for parking lot identification. Conversely, if the vehicle 102 is in the forward parking mode, the processor 116 may use a video stream captured by the front camera 110A for parking lot identification.

At step 518, the processor 116 may identify the parking lot identifier. In an embodiment, after determining that the vehicle 102 is in the parking lot, the processor 116 may identify a parking lot identifier associated with the parking location of the vehicle 102 in the parking lot. In an example, the processor 116 may execute the trained AI model 128 to identify the parking lot identifier in the obtained set of images 126.

At step 520, the processor 116 may determine the speed of the vehicle 102 has reached the predefined value. In an example, the processor 116 may determine the speed of the vehicle 102 has reached the predefined value that is lower than the threshold value. In an example, the predefined value may be 2 kmph, zero, or the like. In other examples, the predefined value may be different. In an example, the processor 116 may identify that the vehicle 102 has been parked or is about to be parked based on the speed of the vehicle 102 reaching the predefined value. In more examples, the processor 116 may determine that a shutdown sequence of the vehicle 102 has begun or is about to begin based on the speed of the vehicle 102 reaching the predefined value.

At step 522, the processor 116 may generate the notification that includes the parking lot identifier. In an example, the notification may be at least one of a group consisting of a text message, an image-based message, and an audio-based message. For example, a text message-based notification may state "The vehicle (Registration No. [XYZ-123]) is parked at Pillar B-3/U-16". In an example, the notification may be a custom or a user-defined notification. For example, the processor 116 may customize the notification according to the specific needs or preferences of the vehicle user.

At step 524, the processor 116 may transmit the notification to the communication device 104 via the initiated communication session. As described above, the notification may be at least one of a group consisting of a text message, an image-based message, and an audio-based message. In an example, the processor 116 may automatically transmit the text-based message to the communication device 104 associated with the vehicle 102 via SMS, push notification, or messaging application interface. In an example, in the case where the notification is an image-based message, the processor 116 may automatically transmit an image of the pillar having the parking lot identifier "B-3/U-16" to the communication device 104 associated with the vehicle 102 via MMS, push notification, or messaging application interface. Also, in the case where the notification is an audio-based message, the processor 116 may automatically transmit an audio message having details of the parking lot identifier "B-3/U-16" to the communication device 104 associated with the vehicle 102 via a voice call or any other suitable means. In an example, the processor 116 may transmit the notification to the communication device 104 based on the determination that the speed of the vehicle 102 has reached the predefined value.

At step 526, the processor 116 may transmit an encoded version of the notification to the cloud server 106 synchronized with the communication device 104. The transmission of the encoded version of the notification to the cloud server 106 may enable availability of the notification to the communication device 104. Therefore, the vehicle user of the vehicle 102 may be enabled to efficiently locate the vehicle 102 in the parking lot using the parking lot identifier without manual intervention. In an example, the processor 116 may transmit the notification to the cloud server 106 based on the determination that the speed of the vehicle 102 has reached the predefined value.

Thus, the present disclosure may assist the vehicle user of the vehicle 102 by way of automatic notification of the parking lot identifier to the communication device 104, which is connected to the infotainment system 114 using Bluetooth MAP profile. In some embodiments, the parking lot identifier is automatically notified to the communication device 104 of the vehicle user once the vehicle 102 is parked in the parking lot without manual intervention, thereby enabling the vehicle user to locate the vehicle 102 in the parking lot efficiently. For example, the burden of remembering the parking lot identifier is alleviated through the automated notification.

In an embodiment of the present disclosure, a system is disclosed. The system may be included in a vehicle. The system may comprise a processor. The processor may be configured to detect that a speed of the vehicle has reached below a threshold value. The processor may be configured to identify, based on the speed of the vehicle reaching below the threshold value, a parking lot identifier associated with a parking location of the vehicle in a parking lot. The processor may be configured to generate for a communication device associated with the vehicle, a notification that includes the identified parking lot identifier.

In some embodiments, the processor may be further configured to obtain, based on the detection that the speed of the vehicle has reached below the threshold value, a set of images captured by a camera system associated with the vehicle. The processor may be further configured to determine that the vehicle is in the parking lot based on parking layout attributes in the obtained set of images. The processor identifies the parking lot identifier based on the determination that the vehicle is in the parking lot.

In some embodiments, the processor may be further configured to receive video streams from the camera system of the vehicle at defined time intervals based on the speed of the vehicle reaching below the threshold value, and where the processor may obtain the set of images from the video streams.

In some embodiments, the parking layout attributes may include at least one of a group consisting of an intensity of light, a presence of alphanumeric characters, and structural cues, in the obtained set of images, and where the alphanumeric characters may represent a plurality of parking lot identifiers associated with the parking lot.

In some embodiments, the identified parking lot identifier may include at least one parking lot identifier, from the plurality of parking lot identifiers, that has a higher resolution than remaining parking lot identifiers, of the plurality of parking lot identifiers, in the obtained set of images.

In some embodiments, the processor may be further configured to execute a trained artificial intelligence (AI) model to determine that the vehicle is in the parking lot and identify the parking lot identifier.

In some embodiments, the processor may further be configured to host the trained AI model.

In some embodiments, the processor may further be configured to establish a communication session with the communication device based on the detection that the speed of the vehicle has reached below the threshold value.

In some embodiments, the communication session may be a Bluetooth session established based on a Message Access Profile.

In some embodiments, the processor may further be configured to transmit the notification to the communication device via the established communication session.

In some embodiments, the processor may further be configured to transmit an encoded version of the notification to a cloud server based on a synchronization between the communication device and the cloud server, and where the transmission of the encoded version of the notification to the cloud server may enable availability of the notification to the communication device.

In some embodiments, the notification may be at least one of a group consisting of: a text message, an image-based message, and an audio-based message.

In some embodiments, the system may include a memory coupled to the processor, where the processor may further be configured to register details associated with the communication device in the memory, and where the notification may be generated for the communication device based on the registered details.

In some embodiments, the processor may further be configured to configure a polling interval to detect the speed of the vehicle.

In some embodiments, the processor may further be configured to: identify a mode of parking of the vehicle, where the mode of parking includes at least one of group consisting of: a forward parking mode and a reverse parking mode; and select, based on the identified mode of parking, video streams from corresponding cameras of a camera system of the vehicle, to identify the parking lot identifier, where the camera system includes at least one of a group consisting of: a front camera, a rear camera, and side cameras.

In some embodiments, the processor may further be configured to determine that the speed of the vehicle has reached a predefined value that is lower than the threshold value; and identify that the vehicle has been parked based on the speed reaching the predefined value, to generate the notification.

In another embodiment of the present disclosure, a method is disclosed. The method comprises detecting, by a processor, that a speed of a vehicle has reached below a threshold value. The method further comprises identifying, by the processor, based on the speed of the vehicle reaching below the threshold value, a parking lot identifier associated with a parking location of the vehicle in a parking lot. The method comprises generating, by the processor, for a communication device associated with the vehicle, a notification that includes the identified parking lot identifier.

In some embodiments, the method further comprises establishing, by the processor, a communication session with the communication device based on the detection that the speed of the vehicle has reached below the threshold value, and transmitting, by the processor, the notification to the communication device via the established communication session.

In some embodiments, the method further comprises transmitting, by the processor, an encoded version of the notification to a cloud server based on a synchronization state of the communication device with the cloud server, where the transmission of the encoded version of the notification to the cloud server may enable availability of the notification to the communication device synchronized with the cloud server.

In some embodiments, the method further comprises monitoring, by the processor, the speed of the vehicle at predefined time intervals to detect whether the speed of the vehicle has reached below the threshold value, and determining, by the processor, that the vehicle is in the parking lot based on the speed of the vehicle reaching below the threshold value. The parking lot identifier is identified based on the determination that the vehicle is in the parking lot.

While various embodiments of the present disclosure have been illustrated and described, it will be clear that the present disclosure is not limited to these embodiments only. Numerous modifications, changes, variations, substitutions, and equivalents will be apparent to those skilled in the art, without departing from the scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements. The term "coupled" may refer to at least one of direct or indirect coupling that may not necessarily be by way of mechanical or any physical means. Further, a system or method that "comprises", "has", or "includes" one or more elements possesses those one or more elements but is not limited to possessing only those one or more elements.

## Claims

1. A system comprising:
a processor configured to:
detect that a speed of a vehicle has reached below a threshold value, wherein the system is included in the vehicle;
identify, based on the speed of the vehicle reaching below the threshold value, a parking lot identifier associated with a parking location of the vehicle in a parking lot; and
generate for a communication device associated with the vehicle, a notification that includes the identified parking lot identifier.

2. The system of claim 1, wherein the processor is further configured to:
obtain, based on the detection that the speed of the vehicle has reached below the threshold value, a set of images captured by a camera system associated with the vehicle; and
determine that the vehicle is in the parking lot based on parking layout attributes in the obtained set of images, wherein the processor identifies the parking lot identifier based on the determination that the vehicle is in the parking lot.

3. The system of claim 2, wherein the processor is further configured to receive video streams from the camera system of the vehicle at defined time intervals based on the speed of the vehicle reaching below the threshold value, and wherein the processor obtains the set of images from the video streams.

4. The system of claim 2 or 3, wherein the parking layout attributes include at least one of a group consisting of: an intensity of light, a presence of alphanumeric characters, and structural cues, in the obtained set of images, and wherein the alphanumeric characters represent a plurality of parking lot identifiers associated with the parking lot.

5. The system of claim 4, wherein the identified parking lot identifier includes at least one parking lot identifier, from the plurality of parking lot identifiers, that has a higher resolution than remaining parking lot identifiers, of the plurality of parking lot identifiers, in the obtained set of images.

6. The system of any of claims 2 to 5, wherein the processor is further configured to execute a trained artificial intelligence (AI) model to determine that the vehicle is in the parking lot and identify the parking lot identifier.

7. The system of any of claims 1 to 6, wherein the processor is further configured to host the trained AI model.

8. The system of any of claims 1 to 6, wherein the processor is further configured to establish a communication session with the communication device based on the detection that the speed of the vehicle has reached below the threshold value.

9. The system of claim 8, wherein the communication session is a Bluetooth session established based on a Message Access Profile.

10. The system of claim 8 or 9, wherein the processor is further configured to transmit the notification to the communication device via the established communication session.

11. The system of any of claims 1 to 10, wherein the processor is further configured to transmit an encoded version of the notification to a cloud server based on a synchronization between the communication device and the cloud server, and wherein the transmission of the encoded version of the notification to the cloud server enables availability of the notification to the communication device.

12. The system of any of claims 1 to 11, wherein the notification is at least one of a group consisting of: a text message, an image-based message, and an audio-based message.

13. The system of any of claims 1 to 12, further comprising a memory coupled to the processor, wherein the processor is further configured to register details associated with the communication device in the memory, and wherein the notification is generated for the communication device based on the registered details.

14. The system of any of claims 1 to 13, wherein the processor is further configured to configure a polling interval to detect the speed of the vehicle.

15. A method comprising:
detecting, by a processor, that a speed of a vehicle has reached below a threshold value;
identifying, by the processor, based on the speed of the vehicle reaching below the threshold value, a parking lot identifier associated with a parking location of the vehicle in a parking lot; and
generating, by the processor, for a communication device associated with the vehicle, a notification that includes the identified parking lot identifier.
